(19) Europäisches Patentamt
European Patent Office
Office européen des brevets

(11) Publication number: **0 429 250 A2**

# (12) EUROPEAN PATENT APPLICATION

(21) Application number: **90312460.0**

(22) Date of filing: **15.11.90**

(51) Int. Cl.5: **C08G 59/18**, C08G 59/68, G03F 7/00, C09J 163/00

(30) Priority: **20.11.89 US 438080**

(43) Date of publication of application: **29.05.91 Bulletin 91/22**

(84) Designated Contracting States: **BE DE FR GB IT**

(71) Applicant: **MINNESOTA MINING AND MANUFACTURING COMPANY**
**3M Center, P.O. Box 33427**
**St. Paul, Minnesota 55133-3427(US)**

(72) Inventor: **Weigl, Stefan, c/o 3M Canada Inc.**
**P.O. Box 5757, London**
**Ontario N6A 4T1(CA)**
Inventor: **Wu, Kam C., c/o 3M Canada Inc.**
**P.O. Box 5757, London**
**Ontario N6A 4T1(CA)**

(74) Representative: **Baillie, Iain Cameron et al**
**c/o Ladas & Parry Isartorplatz 5**
**W-8000 München 2(DE)**

## (54) Tacky photopolymerizable adhesive compositions.

(57) The presence of organic materials having nitrile or vinyl ether groups thereon extends the open time of acid initiated epoxide resin compositions.

EP 0 429 250 A2

# TACKY PHOTOPOLYMERIZABLE ADHESIVE COMPOSITIONS

## BACKGROUND OF THE INVENTION

### Field of the Invention

This invention relates to photopolymerizable adhesive compositions which are printable and which are particularly suitable for high speed lamination processes.

### Background of the Art

Adhesives can be provided in many different chemical forms and many different physical forms. Epoxy resins, acrylates, polyvinyl resins, polyamides, natural gluatanous substances and many other materials are known to be useful adhesives. They may be provided in liquid, powder or solid forms as photocurable, air curable, or thermally curable forms, or need only be dried to form a hard bond.

It is well known that epoxides can be cured very rapidly by the Lewis acid produced by irradiation of photoinitiators such as onium salts. It is also generally recognized that Lewis base such as nitrogen containing molecules can poison the curing reaction and therefore their use should be avoided in ultraviolet cured epoxide formulations (UV Activated Epoxide Curative FC-508, 3M commercial Chemical Divisions, St. Paul, Minn., August 1980). There are many publications patents describing UV curable epoxide compositions containing organic molecules with hydroxyl functionality (U.S. Patent No. 4,256,828, 4,231,951, 4,173,476, 4,218,531, and 4,593,051). The hydroxyl containing molecules are incorporated for modification of coating properties such as flexibility and water resistance. It is recognized that the hydroxylic molecules are Lewis bases.

It is also generally recognized that the photopolymerization of epoxides, once initiated, can propagate in the dark, even when the UV source is turned off. This dark curing mechanism suggests the possibility of UV-curable adhesive between two opaque substrates. In that usage, the adhesive is applied to one substrate and irradiated with UV through the open face. The other opaque substrates are then put into place and the whole assembly is allowed to cure in the dark. However, it is difficult to balance between the open time when the second substrate can be laminated onto the adhesive and the overall cure of the adhesive. Up to 1986,, the UV-curable adhesives known have been formulated for systems where enough activating UV-radiation could be transmit through at least one of the substrates.

German patent DE 3643400 filed by Henkel in December 1986 teaches bonding of opaque substrates with photocurable adhesive. A mixture of epoxides, photoinitiator and optionally photosensitisers are coated on the substrates and exposed to radiation, the substrates are pressed together and curing is allowed to proceed. In an example given, the adhesive was exposed to a 300 W-UV light for 120 seconds and the two substrates were subsequently pressed together for 36 hours at room temperature.

European Patent Application EP 276716 filed by General Electric in August 1988 concerns UV-curable epoxide resin compositions with delayed cure. It teaches using compounds containing polyoxyalkylene moieties to prevent immediate skinning upon exposure to UV light, i.e., to provide an open time. An open time of 4 minutes after UV exposure is given in an example.

In these two references, relatively long open times of 2-4 minutes were obtained either by preventing immediate skinning using polyoxyalkylene or by decreasing the initial reaction rate by a small production rate of the photo-generated catalyst. A relatively long open time is beneficial in allowing for adequate time for positioning of the substrates after irradiation. However it is still not possible to use a UV-curable adhesive for high speed laminating processes with two opaque substrates. In the high speed laminating process, the adhesive has to remain fluid enough until laminating and then set almost simultaneously for further handling. The above-mentioned delay-cure adhesive with its long activation or open time is not suitable for this purpose. An example of laminating process is the metallization of a paper substrate. U.S. Patent 4490409 discloses a process for obtaining metallized surfaces using an electron beam. A thin foil of metal on a carrier was laminated onto an adhesive coated paper. Then the adhesive was cured by electron-beam which can pass through the paper or the thin metal foil. The adhesive was cured within seconds and the carrier was removed. No UV-curable adhesive has been found universally suitable for such an application: the metal foil and the paper generally do not transmit enough UV radiation except when they are extremely thin and the long open time of the delay cure adhesive is not amenable to immediate carrier removal. Canadian Patent 1,117,855 describes using a UV-curable adhesive activated by passing enough radiation through an extremely thin metallic foil, after lamination to substrates.

U.S. Pat No. 4,256,828 describes photocopolymerizable compositions which contain epoxides, organic material with hydroxyl functionality and a photosensitive aromatic sulfonium or idonium salt of a halogen-containing complex ion.

U.S. Pat No. 4,231,951 also describes photocopolymerizable compositions which contain cycloaliphatic epoxides, organic materials having hydroxyl functionality and a triarylsulfonium complex salt photoinitiator.

U.S. Pat No. 4,173,476 describes photocopolymerizable compositions which contain epoxides, organic materials with hydroxyl functionality and a triarylsulfonium complex photoinitiator.

U.S. Pat No. 4,218,531 describes the use of certain organic materials having non-aromatic carbon-carbon unsaturation in connection with photocopolymerizable compositions containing aromatic sulfonium complex salt photoinitiators in order to minimize or eliminate the odor of organosulfur reaction by-products. The photocopolymerizable compositions also contain epoxides and hydroxy-containing organic materials.

R.R. Alm and R.C. Carlson presented at the Radiation Curing VI Conference at Des Plaines, Il (1982) the concept of reducing the tack free time of polyol-modified epoxide coatings during UV exposure by heating the metal substrate to 120-150 °F. It was noted that some polyol-modified epoxide coating formulations giving optimum cured film properties are very slow to photocure to a tack-free state using typical UV processors. The tack-free time was greatly reduced without adversely affecting cured film performance by heating the metal substrate.

U.S. Patent 4,593,051 describes photopolymerizable compositions based on epoxide and polymer/Hydroxy containing organic materials. It is claimed that the formulations can cure very well without any apparent poisoning of the photocuring reaction.

J.V. Crivello et al (Journal of radiation curing Jan. 1983, pp. 6-11) describes the photocuring of vinyl ethers. It also describes the UV cure of vinyl ether-epoxide mixtures. In all cases, addition of bisvinyl ether produced an acceleration of the UV cure rate, particularly at higher proportion of bisvinyl ether.

## Summary of the Invention

The invention describes photopolymerizable adhesive compositions useful in an adhering process. The polymerizable adhesive coating compositions comprise an epoxide resin, a photoinitiator and a photoinitiation rate control agent or curing retarder selected from the group consisting of materials or polymeric materials containing a nitrile substituent and vinyl ethers. The vinyl ether and nitrile containing materials slow the epoxide photocuring reaction and cause the coating composition to became tacky after exposure to activate the photoinitiator. The curing retarder such as the vinyl ether is incorporated into photopolymerizable epoxide coating to control the open time of the formulation (which is defined as the interval between light exposure and when the coating becomes tack-free). More specifically, molecules or polymer containing a nitrile functionality or vinyl ether is added to photopolymerizable epoxide coating formulation which can change the open time from almost instantaneous to greater than 10 minutes. The compositions can optionally contain a reactive diluent, a solvent, pigments and other coating additives where necessary. The adhesives, which are printable by methods such as a gravure printing press, will become tacky within a few seconds upon exposure to actinic radiation. The cohesive and adhesive strength of the adhesive will be strong enough so that a second substrate on a carrier can be laminated onto the adhesive and then the carrier can be removed immediately afterwards. The resulting coating can be cured with or without further heat postcuring. The above compositions can optionally contain a reactive diluent, a solvent, pigments, and other coating additives where necessary.

## Detailed Description of the Invention

The materials of the present invention can be used in a process which comprises the steps of applying an epoxide resin photocurable adhesive composition to a surface, irradiating said adhesive composition with sufficient radiation to activate a photoinitiator in said adhesive and thereby causing the adhesive to become more tacky, and then contacting said activated tacky adhesive with a second material to be adhered to said first surface, said adhesive comprising an epoxy resin, a Lewis acid generating onium catalyst, and a cure retarder comprising molecules containing the vinyl ether or nitrile functionality. The epoxide cure retarders are present in an amount sufficient to at least double the open time of the epoxy resin adhesive composition in the absence of the cure retarder. Depending on the particular cure retarder selected, the amount of retarder present comprises between 0.5 and 35% by weight of the epoxy resins. Preferably the cure retarder comprises between 1 and 25% by weight of the epoxy resin. The higher the proportion of nitrile groups and vinyl ether groups to the molecular weight of the cure retardant, the smaller the proportional weight of retardant needed. It is also preferred that the open time of the epoxy resin adhesive

is at least five times and more preferably at least ten times as long as the composition without the cure retarder. With particularly fast curing systems without retarders (1 to 2 seconds), the open times may be and may have to be extended to twenty, thirty, fifty or even one hundred times as long as the open time (defined as the time to which the adhesive composition becomes tack free) of the adhesive composition without the cure retarder.

The process of using these compositions can be performed in a number of different manners. The adhesive may be applied in a continuous fashion over one surface and a second surface or particulate material contact with the adhesive after activation of the photoinitiator. This use of the compositions of the invention allows some time to pass before the second surface or material has to be contacted with the photoinitiated adhesive. The adhesive can be applied in a discontinuous pattern (e.g., stripes, spots, imagewise distribution, etc.) and a second surface or particulates adhered thereto. The second surface may be intended for permanent adherence to the first surface or, as where a discontinuous pattern of adhesive is laid down, a strippable or tearable layer may be adhered to the adhesive. In the last case, after the adhesive is cured, the tearable layer may be removed, leaving film (or material) only in the area where the adhesive was coated or cured. This kind of transfer process would be particularly useful in generating graphics (by depositing colored areas) or other special markings (as by depositing metal layers or multilayer composite materials).

This process and these compositions can be used with any substrate and material that can be bonded by epoxy resins and includes the adhesion of wood, wood veneer, paper, polymeric materials (film, filaments or particles), metals, metal oxides (layers or particulates) and inorganic oxides generally, layers, filaments or particulates) such as silica, zirconia, zinc oxide and the like, abrasive grit, rubber, and composite materials. Particular products such as wood paneling, plywood, sand paper, circuit boards, and laminates in general may be made by this process.

The epoxides which may be used herein contain two or more epoxide groups having the formula:

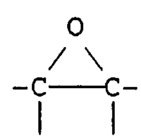

The epoxide groups can be terminal epoxide groups or internal epoxide groups. The epoxides are primarily cycloaliphatics, glycidyl epoxides from bisphenol A and hydrogenated bisphenol A. It may also include aliphatic epoxides, epoxide cresol novolac resins, epoxide phenol novolac resins, polynuclear phenol-glycidyl ether-derived resins, aromatic and heterocyclic glycidyl amine resins, hydantoin epoxide resins, and the like, and mixtures thereof. These epoxides are well known in the art and many are commercially available.

Suitable cycloaliphatic epoxide resins for purposes of this invention are those having an average of two or more epoxide groups per molecule. Illustrative of suitable cycloaliphatic epoxides are the following:

**Formula 1**

Diepoxides of cycloaliphatic esters of dicarboxylic acids having the formula:

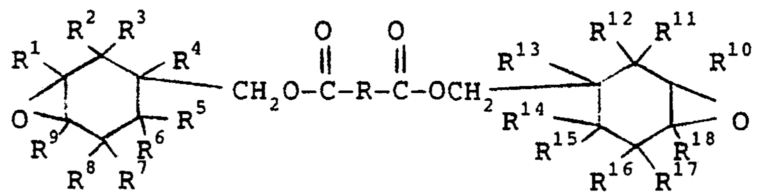

wherein $R^1$ through $R^{18}$ which can be the same or different, are hydrogen or alkyl radicals generally containing one to nine carbon atoms inclusive, and preferably containing one to three carbon atoms, inclusive, as for example methyl, ethyl, n-propyl, n-butyl, n-hexyl, 2-ethylhexyl, n-octyl, n-nonyl and the like, R is a valence bond or a divalent hydrocarbon radical generally containing one to twenty carbon atoms, inclusive and preferably, containing four to six carbon atoms, inclusive, as for example, alkylene radicals,

such as trimethylene, tetramethylene, pentamethylene, hexamethylene, 2-ethylhexamethylene, octamethylene, nonamethylene, hexadecamethylene, and the like, cycloaliphatic radicals, such as 1,4-cyclohexane, 1,3-cyclohexane, 1,2-cyclohexane, and the like.

Particularly desirable epoxides, falling within the scope of Formula I, are those wherein $R^1$ through $R^{18}$ are hydrogen and R is alkylene containing four to six carbon atoms.

**Formula II**

A 3,4-epoxidecyclohexylmethyl-3,4-epoxidecyclohexane carboxylate having the formula:

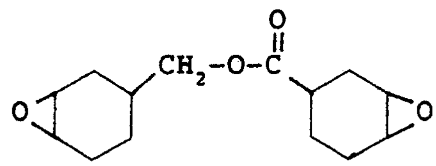

wherein all available substituent positions on the carbon atoms which can be substituted with the same or different group and are as defined for $R_1$ through $R_{18}$ in Formula I. Particularly desirable compounds are those wherein $R_1$ through $R_{18}$ are hydrogen.

Among specific compounds falling within the scope of Formula 11 are the following: 3,4-epoxidecyclohexyl-methyl-3,4-epoxidecyclohexane carboxylate; 3,4-epoxide-1-methylcyclohexylmethyl-3,4-epoxide-1-methylcyclohexane carboxylate; 6-methyl-3,4-epoxidecyclohexyl-methyl-6-methyl-3, 4-epoxidecyclohexane carboxylate; 3,4-epoxide-3-methylcyclohexylmethyl-3, 4-epoxide-3-methylcyclohexane carboxylate; 3,4-epoxide-5-methylcyclohexyl- methyl-3,4-epoxide-5-methylcyclohexane carboxylate. Other suitable compounds are described in, for example, U.S. Pat No. 2890194.

**Formula III**

Diepoxides having the formula:

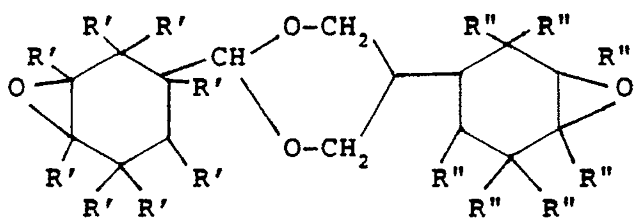

wherein the R single and double primes, which can be the same or different, are monovalent substituents such as hydrogen, halogen, i.e. chlorine, bromine, iodine or fluorine, or monovalent hydrocarbon radicals, or radicals as further defined in U.S. Pat. No. 3,318,822. Particularly, desirable compounds are those wherein all the R's are hydrogen.

Other suitable cycloaliphatic epoxides are the following:

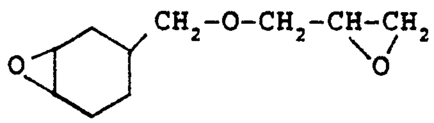

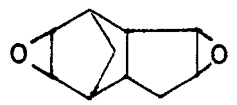

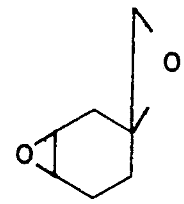

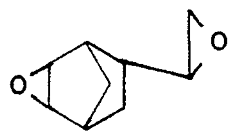

and the like.

The preferred cycloaliphatic epoxides are the following:

3,4-Epoxidecyclohexylmethyl-3,4-Epoxidecyclyhexane carboxylate(ERL 4221);

Bis(3,4-Epoxidecyclohexylmethyl)edipate;

2-(3,4-Epoxidecyclohexyl-5,5-spiro-3,4-epoxide)cyclohexanemeta-dioxane; or mixtures thereof.

Epoxides with six membered ring structures may also be used, such as diglycidyl ester: of phthalic acid, partially hydrogenated phthalic acid or fully hydrogenated acid, the diglycidyl ester: of hexahydrophthalic acids being preferred. A representative diglycidyl ester of phthalic acid is the following:

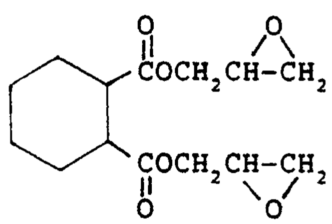

The glycidyl-type epoxides derived from bisphenol A and epichlorohydrin (DGEBA) and have the following formula:

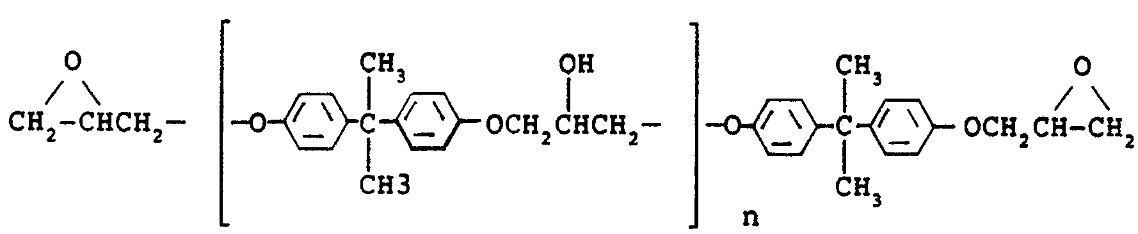

The preferred DGEBA are with n less than one and very close to but above zero.

The other desirable type of glycidyl epoxides are similar to DGEBA except the aromatic rings are hydrogenated. Again the preferred epoxide in this class is with n close to zero. They are available commercially, such as Shell Eponex DRH1510 epoxide resins.

The cresol-novolac epoxide resins are multifunctional, solid polymers characterized by low ionic and hydrolyzable chlorine impurities, high chemical resistance, and thermal performance.

Among the aromatic and heterocyclic glycidyl amine resins which may be included herein are the

following: tetraglycidylmethylenedianiline derived resins of the following formula:

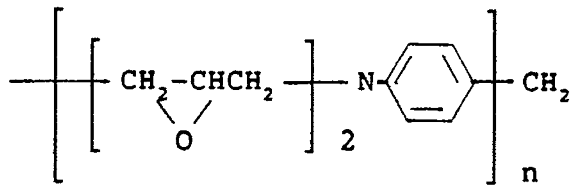

Triglycidyl-p-aminophenol derived resins, triazine based resins and hydantoin epoxide resins are also useful.

It is of course understood by those skilled in the art that when a photoinitiator is used, only minor amounts of basic organic nitrogen-containing epoxide compounds may be used so as not to interfere with the photocopolymerization reaction.

The concentration of the epoxides in the photocopolymerizable and blend compositions of this invention can range from about 10 to about 99 weight percent, preferably from 40 to 97 weight percent, and most preferably from 60 to 95 weight percent of the total weight of the coating composition depending upon the desired properties in the cured compositions.

The photoinitiator suitable for use in the coating compositions of this invention may be any one of the well known photoinitiators such as described in, for example, U.S. Pat Nos. 4,231,951, 4,256,828, 4,138,255, and 4,058,401. Preferred photoinitiators include triarylsulfonium complex salts as described in U.S. Pat No. 4,231,951 aromatic sulfonium or idonium salts of halogen-containing complex ions as described in U.S. Pat No. 4,256,828; aromatic onium salts of Group Va elements as described in U.S. Pat No. 4,069,055. The photoinitiators are used in conventional amounts such as from about 0.1 to parts by weight per 100 parts by weight of the combination of epoxide and vinyl ether.

The vinyl ether used for the present invention can be any of the mono, di and multifunctional photopolymerizable vinyl ethers. The preferred vinyl ether are the di-functional or multi functional vinyl ether such as diethylene glycol divinyl ether or triethylene glycol divinyl ether. The amount of vinyl ether used depends on the nature of the ether. They can range from 1 to 50 weight percent of total composition, preferably 10 to 40 percent and most preferably 15 to 30 weight percent.

A description of some of the vinyl ethers useful in the present invention may be made by the formula:

$R \text{-}(OCH=CH_2)_n$

wherein

R is an organic bridging group having n substituents, and

n is an integer of at least 1 (preferably 2, 3, or 4, most preferably 2),

R is preferably phenyl, alkylene, or alkylene-substituted phenyl of up to 20 carbon atoms.

The nitrile containing retardant materials may be represented by the formula:

$R^1\text{-}(CN)_m$

wherein R is an organic bridging group (including polymeric backbones) and having m CN substituents wherein m is at least 1.

Nitrile-containing polymers can be obtained by the homopolymerization of acrylonitrile or the copolymerization with other ethylenically unsaturated molecules (e.g., 1,4-butadiene or styrene). For ease of dispersion into the epoxide resin, liquid polymers with molecular weights between 1000 and 5000 are preferred. The most desirable nitrile-containing liquid polymers are those with end groups reactive with epoxy moieties and synthesized by the copolymerization of acrylonitrile with other materials (e.g., 1,4-butadiene). Some of these reactive liquid polymers are available commercially, e.g., Hycar$^R$ CTBN, a carbonyl-terminated butadiene nitrile polymer (B. F. Goodrich). The CTBN rubber also serves as a tack enhancer when polymerization of the epoxide resin begins after irradiation. Depending upon the nitrile content, the reactive liquid polymers can be used in amounts of 1 to 50% by weight, preferably 4 to 25% and more preferably 8 to 15% by weight of the epoxy resin in the composition.

The composition can be clear on pigmented. Of course, it is clear to everyone familiar in the art the pigment will affect the light absorption and hence the photocuring of the epoxide. For reference of pigment compatible with the photopolymerization mechanism, see UV Activated Epoxide Curative FX-512, 3M Commercial Chemicals Division, May, 1985.

In preparing the coating compositions, the ingredients are mixed by conventional procedures used in the production of inks, paints and coating compositions. These procedures are so well known to those

skilled in the art that they do not require further discussion here. However, it should be noted that when the photoinitiator is incorporated into the coating compositions, it is necessary that the curable coating formulation be mixed or blended under "safe light" such as a yellow light source to obviate or minimize photopolymerization. The coating compositions can also contain an organic solvent as an optional component. Any of the conventional solvents used in the coatings industry can be used at a concentration preferably below 30 weight percent of the total weight of the coating composition. Suitable solvents are methyl ethyl ketone, methylene chloride and any solvent that does not react appreciably with the epoxide containing two or more epoxide groups and the photoinitiator. While larger amounts of solvent could conceivably be used, the use of larger amounts would negate the benefits of radiation curable coating which are considered to be essentially 100% solids coating systems. The solvents are generally added in the small amounts indicated to improve flowability during application of the coating composition to the substrate.

Curing or photopolymeriztion of the coating compositions occurs on exposure of the compositions to any source of radiation emitting actinic radiation at a wavelength within the ultraviolet and visible spectral regions. Suitable sources of radiation include mercury, xenon, carbon arc and tungsten filament lamps, sunlight, etc. Exposures may be from less than about 1 second to 10 minutes or more depending upon the amounts of particular polymerizable materials and photoinitiators being utilized and depending upon the radiation source and distance from the source and the thickness of the coating to be cured. The compositions may also be polymerized by exposure to electron beam irradiation. Generally speaking the dosage necessary is from less than 1 megarad to 100 megarad or more. Generally, speaking, the open time increases with relative humidity, amount of Lewis base and decreases with increase of radiation available.

The curing or photopolymerization of the coating compositions is a triggered reaction. Once the degradation of the photoinitiator to a cationic catalyst has begun by exposure to a radiation source, the curing or photopolymerization reaction proceeds and will continue after the radiation source is removed. The use of thermal energy during or after exposure to a radiation source, i.e., post cure thermally, will accelerate the curing reaction, and even a moderate increase in temperature may greatly accelerate cure rate.

## Example 1

The effect of a cure retardant on epoxide photoreaction can be put into beneficial use as illustrated by the present example. The photopolymerizable composition can be formulated to a clear on pigmented printable photopolymerizable adhesive which can be applied in a precise high resolution pattern and displays controlled transient tackiness for high speed lamination. The photopolymerizable adhesive with the following composition is prepared.

| Materials | Weight |
|---|---|
| Shell Eponex DRH 1510 | 100 gm |
| B.F. Goodrich, Hycar CTBN 1300 x 13 | 10 |
| Triarylsulfonium Hexafluoroantimonate | 3 |
| Cabosil M-5 | 5 |
| Methyl ethyl ketone | 29 |
| Degussa Special Black 250 | 5 |

This adhesive was irradiated at ambient temperature using an RPC UV Processor with the following conditions: 2 lamps at 300 watts/linear inch and line speed 210 feet/minute.

Successful transfers of metal foil from a release liner to adhesive has been demonstrated for times less than two seconds after irradiation. Depending on processing conditions, or the levels of photoinitiator, reactive rubber and carbon black incorporated in the formulation, the open time can be controlled from 1 second to about six minutes. The resistance of adhesive post cured for 24 hours at 70 °C to a variety of chemical agents was evaluated. The results are summarized in the following Table. The integrity of the final bond is such that any attempt to separate the foil from the substrate results in the complete destruction of either or both.

| Chemical Resistance Testing | | |
|---|---|---|
| MEDIUM | CONDITION | OBSERVATION |
| Perchloroethylene | 2 h @ 65 °C | No effect |
| Denatured alcohol | 2 h @ 65 °C | No effect |
| 0.5% W/W BioAd (aq) | 2 h @ 65 °C | No effect |
| Toluene | 2 h @ 65 °C | No effect |

## Example 2

In the previous example, the Lewis base Hycar CTBN 1300 x 13 affects the photopolymerization rate of the epoxide and a transient tacky adhesive is obtained. Controllable transient tacky adhesive can also be obtained from the effect of vinyl ethers on the epoxide curing rate. Photopolymerizable epoxide compositions as the following are tested:

| Material | Composition |
|---|---|
| Shell Eponex DRH 1510 | 72.7 - 47.7% |
| Union Carbide ERL 4221 | 0 - 25% |
| Diethyleneglycol divinyl-ether | 24% |
| 3M FX-512 | 3.3% |

All formulation were applied with a labsize gravure printing press on clay coated paper yielding five different coating thicknesses. The samples were irradiated on the RPC UV processor with a conveyor speed of 200 ft./min. and both lamps on 200 w/in. setting. The R.H. during the evaluation process was 61% with a temperature of 21 °C. Metal transfer times were established by rubbing a metallized film, while placed on the printed adhesive with the wooden tip of a cotton applicator, and recording the time when transfer of metal coating ceases.

The results in the accompanying graph clearly show that when the % ERL in the epoxide resin combination exceeds 23%, no metal transfer occurs upon adhesive irradiation. On decreasing the ERL 4221 which photopolymizes faster than Eponex DRH 1510, the open time increases. In fact for a ERL 4221 concentration of 5% by weight of total formulations, the open time is extended to about 40 minutes by the Lewis base substituted vinyl ether.

The compositions are suitable in a variety of applications where a transient adhesive with an open time from seconds to more than 10 minutes on demand from low viscosity liquids and which can ultimately cure, to a strong cohesive film is required. The transient adhesive properties of the photopolymerizable epoxide composition as illustrated in Examples 1 and 2 can be put into many usages besides metallized film transfer. It is particularly useful for applications such as between two metal plates or between various electronic components and the printed circuit board where the adherend is not transparent to the actinic light employed.

### Claims

1. A photosensitive, curable epoxy resin adhesive composition comprising at least one epoxide resin, a photoinitiator for said epoxide resin which generates a Lewis acid upon initiation, and an epoxide cure retardant selected from the group consisting of an organic material substituted with nitrile or vinyl ether in sufficient amount to extend the open time for said epoxide resin composition to at least twice that of the composition without said cure retardant.

2. A photosensitive, curable epoxide resin adhesive composition comprising at least one epoxide resin, a photoinitiator for said epoxide resin which generates a Lewis acid upon initiation, and an epoxide cure retardant selected from the group consisting of an organic material substituted with nitrile or vinyl ether groups in a weight percent of from 0.5 to 35% by weight of said epoxide resin.

3. The composition of claimS 1 or 2 wherein said photoinitiator comprises a photosensitive onium photoinitiator capable of curing epoxy resins.

4. The composition of claims 1 or 2 wherein said photoinitiator is selected from the group of iodonium and sulfonium photoinitiators:

5. The composition of claims 1 or 2 wherein said cure retardant is an organic compound with nitrile groups.

6. The composition of claim 3 wherein said cure retardant is an organic polymeric compound with nitrile groups having a molecular weight between 1000 and 5000 in an amount of 1 to 50% by weight of said epoxy resin.

7. The composition of claims 1 or 2 wherein said cure retardant comprises a vinyl ether material.

8. The composition of claim 3 wherein said cure retardant comprises a vinyl ether material.

9. The composition of claim 4 wherein said cure retardant comprises a vinyl ether material.

10. The composition of claims 1 or 2 wherein said cure retardant comprises a polymer bearing nitrile groups.